# DEMANDE DE BREVET EUROPEEN

(11) **EP 1 260 568 A1**
(43) Date de publication de la demande: **27.11.2002**
(21) Numéro de dépôt: 02291261.2
(22) Date de dépôt: 22.05.2002
(51) Int. Cl.: C09K 17/04, C09K 17/06, C04B 5/06, C04B 7/17

(54) **Procédé de fabrication d'une composition de traitement de sol, compositions de traitement de sol et utilisation de telles compositions**

(30) Priorité: 23.05.2001 FR 0106782
(71) Demandeur: Mecaroute, 92008 Nanterre (FR); European Steel Mill Services, 75008 Paris (FR)
(72) Inventeur: Bompay, Jean-Yves, 60800 Fresnoy le Luat (FR); Prunevieille, Jean-Michel, 92420 Vaucresson (FR); Wright, Kenneth, Lane Milford, 48380 Michigan (US)
(74) Mandataire: Abello, Michel

(57) **Abrégé**

La présente invention concerne un procédé de fabrication d'une composition de traitement de sol, des compositions de traitement de sol et une utilisation de telles compositions. Le procédé selon l'invention se caractérise par le fait qu'il comprend une étape de sélection d'une ou plusieurs scorie(s) ayant une teneur en chaux libre déterminée supérieure ou égale à une première valeur seuil, une étape d'ajout (B1) de chaux libre à la ou aux scorie(s), et une étape de broyage de la ou des scorie(s), pour obtenir une composition de traitement de sol ayant une teneur en chaux libre déterminée supérieure ou égale à une seconde valeur.

## Description

La présente invention concerne un procédé de fabrication d'une composition de traitement de sol, des compositions de traitement de sol et une utilisation de telles compositions.

L'invention concerne en particulier un procédé de fabrication de composition de traitement de sol utilisant des scories d'aciérie de conversion à l'oxygène, et des compositions de traitement de sol à base de telles scories.

Les scories ou laitiers d'aciérie de conversion à l'oxygène sont des sous-produit résultant de l'affinage de la fonte à l'oxygène, par exemple par le procédé Linz-Donawitz (LD), pour obtenir un acier résultant de la décarbonatation de la fonte. Cet affinage est réalisé par l'addition de chaux dans la fonte en fusion placée dans un convertisseur. La chaux permet d'extraire les impuretés en réagissant sur celles-ci pour former la scorie. Dans la présente, une scorie désigne une scorie d'aciérie de conversion à l'oxygène obtenue à partir d'une seule coulée provenant d'un convertisseur. La quantité de chaux ajoutée dans le convertisseur dépend du niveau d'affinage souhaité, c'est-à-dire de 1a qualité d'acier souhaité. La chaux libre ou chaux vive n'ayant pas réagi se retrouve dans la scorie résultante. Suivant la quantité de chaux ajoutée, la teneur en chaux libre dans la scorie résultante peut varier de façon importante, généralement entre 1 et 15 % en poids, et peut exceptionnellement atteindre des valeurs de 17-18 % en poids. Après refroidissement, la scorie est concassée sous forme de granulats ou agrégats et traitée au cours d'une étape de déferrisation pour récupérer une partie du fer qu'elle contient. Cette étape de déferrisation est réalisée avant et pendant le concassage, principalement peu après.

Pour une utilisation dans la réalisation de chaussées routières sous forme d'agrégats, la teneur en chaux libre de cette scorie d'aciérie présente de grands problèmes, en raison des risques très importants de gonflement de nodules de chaux libre emprisonnés dans la scorie, entraînant un éclatement des granulats. Généralement, les différentes scories, sous forme de granulats, provenant de différentes coulées, sont stockées ensemble. Dans ce cas, les granulats de grosses tailles, supérieures à 8 mm, sont récupérés par criblage pour être utilisés, par exemple, pour la réalisation de chemins forestiers ou dans le domaine de la fertilisation agricole. En effet, plus la teneur en chaux libre est importante et plus la scorie est friable. Ainsi, les granulats de plus grosses tailles sont les moins chargés en chaux libre. Les autres granulats, de tailles inférieures à 8 mm présentent une teneur en chaux libre variant de 1 à 15 % en poids, et sont généralement rejetés sans être utilisés.

Toutefois, il est possible de prévoir la teneur en chaux libre pour une scorie donnée, en fonction de la chaux ajoutée dans le convertisseur. Ainsi, lorsque la scorie présente moins de 5 % en chaux libre, celle-ci peut être utilisée sous forme d'agrégat pour la réalisation de chaussées routières. De 1 à 2 % en poids, les agrégats constituent des agrégats dits de haute qualité pouvant être utilisés pour réaliser la couche de surface ou enrobé, en surface d'une voie routière. De 2 à 4,5-5 % en poids, la scorie peut être utilisée pour la réalisation de la couche intermédiaire et de la couche de fondation d'une voie routière. Au-delà d'une teneur en chaux libre de 5 %, il est considéré que la scorie ne peut être utilisée sous forme de granulat, en raison des risques d'éclatement des granulats mentionnés précédemment. Pour valoriser cette scorie, il a alors été envisagé de limiter sa teneur en chaux libre. Une première solution consiste à effectuer une injection de silice et d'oxygène dans le convertisseur, après évacuation de l'acier, pour faire réagir la chaux libre. Cette solution permet de réduire la teneur en chaux libre jusqu'à 1 à 2 % en poids, mais se révèle très onéreuse. Une deuxième solution consiste à effectuer un stockage prolongé à l'air libre des granulats, pendant plusieurs mois. Ce stockage permet d'hydrater les granulats et ainsi d'abaisser la teneur en chaux libre, jusqu'à un seuil de 4,5 à 5 % en poids. Toutefois, cette solution ne permet pas d'hydrater les nodules de chaux libre au coeur des granulats pour les faire éclater.

Par ailleurs, pour stabiliser et renforcer un sol, notamment pour la préparation de chaussées routières, i1 est connu d'épandre sur le sol de la chaux dans une première étape, et ensuite de traiter le sol avec du ciment dans une deuxième étape. Le traitement à la chaux est destiné notamment à démotter le sol en floculant les particules argileuses. Pour remplacer ce traitement à la chaux puis au ciment, la demande de brevet FR 2 733 774 propose des produits de traitement comprenant un laitier d'aciérie de conversion à l'oxygène tout venant ou à teneur en chaux libre d'origine non sélectionnée et du laitier de haut fourneau, qui sont de préférence moulus. Dans une première étape, le sol est malaxé avec un laitier d'aciérie de conversion à l'oxygène. Dans une deuxième étape, le sol est malaxé avec le laitier de haut fourneau qui agit comme liant hydraulique. Le laitier d'aciérie est utilisé pour floculer les argiles du sol à traiter et activer le laitier de haut fourneau. Toutefois, ce document, qui ne précise pas la nature exacte du laitier d'aciérie utilisé, nécessite des quantités importantes de tels laitiers d'aciérie à teneur en chaux libre non sélectionnée, qui sont difficilement transportables de par leur forte densité, pour obtenir l'effet recherché.

Ainsi, les scories d'aciérie ayant une teneur en chaux libre supérieure à 5 %, sont actuellement très peu utilisées pour les raisons précitées, de telles scories représentant plus de 55 % du tonnage total des scories d'aciérie produites en France. Le but de l'invention est de proposer une solution permettant d'utiliser ces scories d'aciérie de conversion à l'oxygène.

Dans ce but, l'invention propose un procédé de fabrication d'une composition de traitement de sol, caractérisé par le fait qu'il comprend une étape de sélection d'une ou plusieurs scorie(s) ayant une teneur en chaux libre déterminée supérieure ou égale à une première valeur seuil, une étape d'ajout de chaux libre à la ou les scorie(s), et une étape de broyage de la ou des scorie(s), pour obtenir une composition de traitement de sol ayant une teneur en chaux libre déterminée supérieure ou égale à une seconde valeur.

Avantageusement, l'étape de sélection consiste à sélectionner une ou plusieurs scorie(s) d'aciérie de conversion à l'oxygène.

Selon un premier mode de réalisation, ladite étape d'ajout de chaux libre consiste à ajouter de la chaux libre à une coulée de scorie d'aciérie de conversion à l'oxygène, à l'état fondu, provenant d'un convertisseur de fusion de la fonte en acier utilisant une charge de chaux, puis à refroidir ladite coulée pour obtenir une scorie surchaulée solide ayant une teneur en chaux libre supérieure ou égale à la seconde valeur précitée, ladite étape de broyage consistant à broyer une ou plusieurs scorie(s) surchaulée(s) obtenue(s) à l'étape précédente.

Selon un deuxième mode de réalisation, ladite étape d'ajout de chaux libre consiste à ajouter de la chaux libre à une ou plusieur(s) scorie(s) d'aciérie de conversion à l'oxygène à l'état solide, obtenue(s) après refroidissement d'une ou plusieur(s) coulée(s) de scorie(s) provenant d'un convertisseur de fonte en acier utilisant une charge de chaux, ladite étape d'ajout étant réalisée avant ou pendant ladite étape de broyage, de manière à obtenir un mélange intime de(s) scorie(s) et de chaux libre, ledit mélange intime formant la composition de traitement.

Selon une particularité, l'étape d'ajout de chaux libre est précédée d'une étape d'analyse chimique de la ou des scorie(s) pour déterminer la quantité nécessaire de chaux libre à ajouter pour atteindre ou dépasser la seconde valeur précitée.

Selon une autre particularité, ladite étape de sélection consiste à sélectionner des coulées de scories à l'état fondu provenant d'un convertisseur de fonte en acier, en fonction de la charge de chaux ajoutée audit convertisseur pour préparer l'acier voulu.

Avantageusement, le procédé comprend une étape de déferrisation de(s) scorie(s) d'aciérie de conversion à l'oxygène à l'état solide.

Par ailleurs, l'invention propose un premier type de composition de traitement de sol, qui se caractérise par le fait qu'elle comprend une ou plusieur(s) scorie(s) moulue(s) ayant une teneur en chaux libre supérieure à 18 % en poids.

L'invention propose un deuxième type de composition de traitement de sol, qui se caractérise par le fait qu'elle est constituée par un mélange intime d'une ou plusieur(s) scorie(s) moulue(s) ayant une teneur en chaux libre supérieure ou égale à 5 % en poids et de la chaux libre, ledit mélange ayant une teneur en chaux libre supérieure à 15 % en poids.

L'invention propose en outre une utilisation des compositions de traitement de sol précitées pour assécher et floculer un sol.

L'invention sera mieux comprise, et d'autres buts, détails, caractéristiques et avantages apparaîtront plus clairement au cours de la description explicative détaillée qui va suivre de deux modes de réalisation particuliers actuellement préférés du procédé selon l'invention, en référence au dessin schématique annexé.

Sur ce dessin :
- la figure 1 représente schématiquement le procédé de fabrication d'une composition de traitement de sol selon un premier mode de réalisation ;

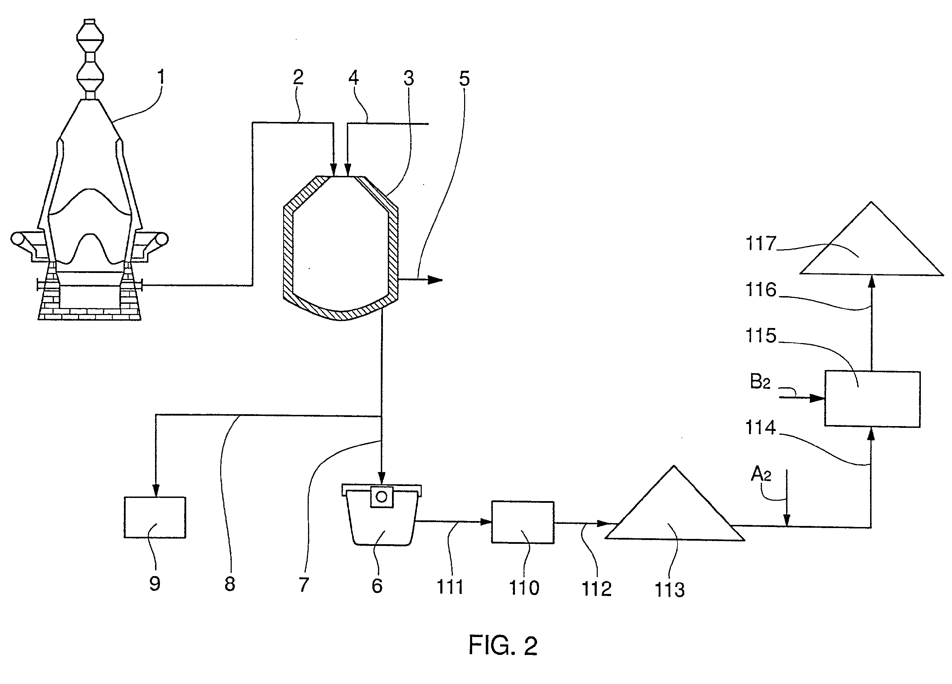

- la figure 2 représente schématiquement le procédé de fabrication d'une composition de traitement de sol selon un deuxième mode de réalisation.

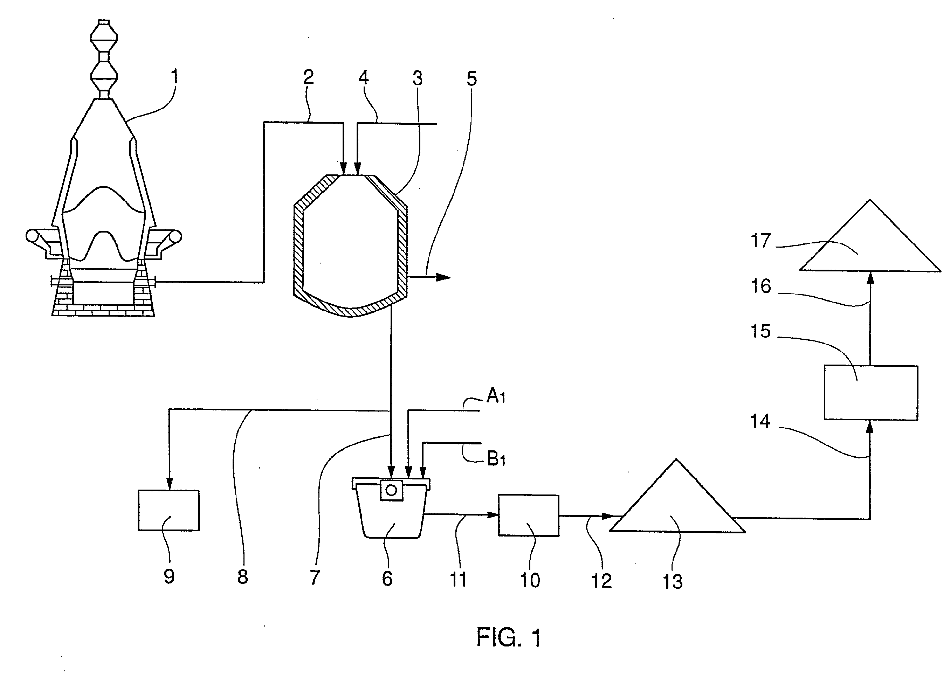

Le procédé de fabrication d'une composition de traitement selon l'invention utilise de préférence des scories d'aciérie de conversion à l'oxygène résultant de la fabrication d'acier à partir de la fonte, par exemple par le procédé LD. Suivant la figure 1, de manière connue, la fonte en fusion d'un haut fourneau 1 est introduite, tel que représenté par la flèche référencée 2, dans un four de conversion en acier, appelé communément convertisseur 3. De la chaux est ensuite introduite dans le convertisseur, tel que représenté par la flèche référencée 4. La quantité de chaux ajoutée est déterminée en fonction de la qualité d'acier recherchée. Après extraction 5 de l'acier à l'état fondu du convertisseur, la coulée résultante de scories, par exemple de l'ordre de 20 tonnes, est versée dans un pot à scorie.

La composition chimique moyenne d'une scorie obtenue par un procédé LD, appelée scorie LD, après déferrisation, s'établit comme suit :

| Composé | % en poids dans la scorie |
|---|---|
| CaO | 40-55 |
| SiO₂ | 10-15 |
| Al₂O₃ | 1-3 |
| MgO | 2-8 |
| Fe métallique | 10-20 |
| MnO | 2-7 |
| P₂O₅ | 1-2 |
| S | <0,05 |

La scorie comprend de 45 à 55 % en poids de chaux (CaO) libre réactive ou ayant réagi, et de 0 à 15 % en poids de chaux libre réactive.

En fonction de la quantité de chaux ajoutée dans le convertisseur, il est possible de prévoir la teneur en chaux n'ayant pas réagi, à savoir la chaux libre, dans la coulée. Une présélection des coulées est ainsi effectuée pour ne traiter par le procédé selon l'invention que les coulées ayant une teneur en chaux libre supérieure à une première valeur seuil d'au moins 5 % en poids. Si la coulée est susceptible de présenter plus de 5 % en poids de chaux libre, celle-ci est transférée, depuis le convertisseur 3 vers un pot à scorie 6, tel que représenté par la flèche 7. Dans le cas inverse, la coulée est écartée en la versant dans un bassin de récupération 9, tel que représenté par la flèche 8. Suivant leurs teneurs en chaux libre, les scories résultant de ces dernières coulées pourront être utilisées pour la réalisation de couche de surface, de couche intermédiaire ou de couche de fondation d'une chaussée, tel que décrit précédemment.

Selon un premier mode de réalisation illustré à la figure 1, dans une première étape A1, une analyse chimique de la coulée venant d'être récupérée dans le pot 6 est effectuée afin de déterminer sa teneur exacte en chaux libre. Suivant la teneur mesurée, dans une deuxième étape B1, un ajout de chaux à la scorie à l'état fondu est réalisé pour obtenir une scorie dite surchaulée ayant une teneur en chaux libre déterminée supérieure ou égale à une deuxième valeur d'au moins 15 % en poids. La teneur en chaux libre de la scorie surchaulée est par exemple comprise entre 15 et 50 % en poids. La chaux ajoutée est constituée dans sa majeure partie de chaux libre, de préférence d'au moins 80 % de chaux libre. Ensuite, la scorie à l'état fondu est transférée dans un bassin de récupération 10 pour refroidir. La scorie solidifiée est ensuite stockée en tas 13. Ces étapes de transfert et de stockage sont représentées par les flèches référencées respectivement 11 et 12. La scorie est ensuite amenée, suivant la flèche 14, dans une unité de broyage 15 dans laquelle la scorie est broyée afin d'obtenir une scorie sous forme de poudre, dite moulue. La scorie est broyée à une granulométrie inférieure à 100 µm, de préférence inférieure à 50 µm, par exemple à environ 20 µm. Les scories moulues présentent des surfaces spécifiques Blaine (Norme NF EN 196-6) inférieures à 5 000 cm²/g, par exemple de l'ordre de 3 500 cm²/g. La scorie est déferrisée par un procédé d'aimantage connu en soi. Cette étape de déferrisation est réalisée après l'étape de refroidissement sur la scorie solidifiée, avant, pendant et/ou après l'opération de broyage. La scorie moulue et déferrisée est ensuite stockée en silos 17 pour éviter une dégradation de la scorie moulue sous l'action de l'eau, cette étape étant référencée par la flèche 16. Cette scorie moulue ayant une teneur en chaux libre déterminée constitue une composition de traitement de sol selon l'invention, dont une utilisation est décrite ci-après. Suivant l'application de la composition, des compositions de différentes teneurs en chaux libre pourront être réalisées. Différentes scories surchaulées provenant de différentes coulées et ayant été ajustées à une teneur en chaux libre identique ou sensiblement identique peuvent être stockées en un même tas 13 après refroidissement. Des scories provenant de différentes coulées peuvent être réparties dans différents tas après refroidissement suivant leurs teneurs en chaux libre, les scories de tas différents étant par la suite, broyées et stockées dans des silos différents. Cette répartition des scories suivant leurs teneurs en chaux libre peut également être effectuée uniquement après l'étape de broyage dans différents silos.

Selon un deuxième mode de réalisation, la chaux est ajoutée non pas à la scorie à l'état fondu, mais à la scorie à l'état solide. La coulée 7 ayant une teneur en chaux libre supérieure ou égale à une première valeur seuil déterminée, est versée dans un pot à scorie 6, transférée dans un bassin 110 pour être refroidie, puis stockée en tas 113, ces différentes étapes étant représentées par les flèches 111 et 112. Une analyse chimique de la scorie est ensuite réalisée, tel que représenté par la flèche A2, pour déterminer la teneur en chaux libre de celle-ci. La scorie est ensuite amenée dans une unité de broyage 115, tel que représenté par la flèche 114. Dans une étape B2, de la chaux est ajoutée à la scorie placée dans l'unité de broyage et l'ensemble est broyé pour obtenir un mélange intime surchaulé, de chaux et de scorie moulue, ayant une teneur en chaux libre déterminée, supérieure ou égale à la deuxième valeur précitée, la quantité de chaux ajoutée étant ajustée en fonction de la teneur en chaux libre de la scorie mesurée préalablement. L'étape de déferrisation peut être réalisée avant, pendant et/ou après broyage de la scorie et avant, pendant et/ou après l'ajout de chaux libre. La présence importante de chaux dans la scorie, qui la rend plus friable, ainsi que l'opération de broyage, permettent de récupérer des particules de fer plus petites et ainsi d'améliorer l'efficacité de l'étape de déferrisation. Le mélange déferrisé est ensuite stocké en silos 117, cette dernière étape étant représentée par la flèche 115. Le mélange intime ainsi obtenu constitue une composition de traitement de sol selon l'invention. La chaux peut également être ajoutée pendant ou après le broyage de la scorie. Dans ce dernier cas, le broyage est poursuivi après l'ajout de la chaux pour assurer un mélange intime. De plus, l'analyse chimique peut être effectuée sur la scorie moulue avant l'ajout de chaux. Des mélanges peuvent être répartis dans différents silos 117 après l'étape de broyage, suivant leurs teneurs en chaux libre. Eventuellement, les scories provenant de différentes coulées peuvent être réparties sur différents tas 113 après refroidissement, en fonction de leurs teneurs en chaux libre prévisibles, déduites à partir de la quantité de chaux ajoutée dans le convertisseur pour affiner la fonte.

Dans une variante du premier mode de réalisation, qui consiste à ajouter de la chaux libre à une scorie à l'état fondu, la chaux est ajoutée dans le convertisseur à la scorie à l'état fondu, après extraction de l'acier et une analyse chimique préalable.

Les compositions de traitement de sol selon l'invention peuvent être utilisées pour traiter un sol, par exemple limoneux ou argileux, afin de le rendre apte à la circulation, notamment pour des engins de chantier pour réaliser des plate-formes routières et autoroutières, ou lui conférer une certaine stabilité pour réaliser des remblais de talus.

Le sol peut être traité sur place ou en centrale. Dans le cas du traitement d'un sol sur place, la composition de traitement, comprenant une scorie surchaulée ou un mélange intime surchaulé de scories et de chaux, est épandue sur le sol à traiter à un dosage calculé au cas par cas, qui est fonction de la nature du sol à traiter et du résultat souhaité. La composition est épandue sur le sol puis le sol et la composition sont ensuite malaxés au moyen d'une machine, couramment appelée pulvimixeur, qui permet de régler l'épaisseur de la couche traitée. La composition peut être épandue sur le sol soit directement, soit à l'aide du pulvimixeur précité. Ensuite, le sol est compacté afin d'obtenir une surface plane.

Le traitement du sol par la composition a pour but de modifier l'état hydrique et de neutraliser les argiles. L'action de la composition se traduit par une baisse de la teneur en eau et par une floculation des argiles. Cette baisse de la teneur en eau résulte notamment d'une augmentation de la température due à l'extinction de la chaux libre par l'eau, cette augmentation de la température engendrant une évaporation de l'eau. Par ailleurs, le traitement se traduit par un ajout au sol de matières sèches, les matières sèches étant constituées par toutes matières dans la composition de traitement autres que la chaux libre et par une aération du sol lors du malaxage.

La quantité de composition ajoutée au sol à traiter sera fonction de sa teneur en chaux libre, à comparer à celle de chaux routière traditionnellement utilisée pour cette application, qui contient environ 80 % en poids de chaux libre, et de la quantité de matières sèches ajoutée, qui sera plus importante que dans le cas du traitement à la chaux. A titre d'exemple, pour le traitement d'un sol nécessitant un dosage de 1 % en poids de chaux routière, soit 0,8 % en poids de chaux libre, le dosage théorique d'une composition selon l'invention comprenant 30 % en poids de chaux libre, pour obtenir la même teneur en chaux libre de 0,8 %, est de 2,67 % en poids. Cependant, dans le cas de la composition selon l'invention la quantité de matières sèches ajoutée dans le sol est de 1,87 % en poids (2,67 % de 70 %), tandis que dans le cas de l'utilisation de chaux routière cette quantité est de 0,2 % en poids. L'incidence dans un sol humide de cet ajout de matières sèches supérieur permet de diminuer le dosage théorique de la composition basé uniquement sur la teneur en chaux libre. Ainsi, dans l'exemple précité, un dosage de la composition de l'ordre de 2 % en poids permet d'obtenir le même résultat qu'avec un traitement à la chaux routière.

Un traitement en centrale d'un sol s'effectue dans les mêmes conditions que celles décrites précédemment, seul le moyen de malaxage diffère. Le traitement en centrale permet d'obtenir un malaxage plus intime et plus précis du sol et de la composition de traitement.

Bien que l'invention ait été décrite en liaison avec deux modes de réalisation particuliers du procédé selon l'invention, il est bien évident qu'elle n'y est nullement limitée et qu'elle comprend tous les équivalents techniques des moyens décrits ainsi que leurs combinaisons si celles-ci entrent dans le cadre de l'invention. Le procédé selon l'invention peut être appliqué à des scories d'aciérie de conversion à l'oxygène, telles que des scories LD, ainsi qu'à tout type de scories comprenant de la chaux libre, y compris les scories dites de four à arc ou scories E.A.F (Electric Arc Furnace) issues d'un procédé E.A.F de traitement de l'acier.

## Revendications

1. Procédé de fabrication d'une composition de traitement de sol, **caractérisé par le fait qu'**il comprend :
- une étape de sélection d'une ou plusieurs scorie(s) ayant une teneur en chaux libre déterminée supérieure ou égale à une première valeur seuil,
- une étape d'ajout (B1, B2) de chaux libre à la ou les scorie(s) en fonction de la teneur en chaux libre de la ou des scorie(s), et
- une étape de broyage de la ou des scorie(s),
pour obtenir une composition de traitement de sol ayant une teneur en chaux libre déterminée supérieure ou égale à une seconde valeur.

2. Procédé selon la revendication 1, **caractérisé par le fait que** l'étape de sélection consiste à sélectionner une ou plusieurs scorie(s) d'aciérie de conversion à l'oxygène.

3. Procédé selon la revendication 2, **caractérisé par le fait que** :
- ladite étape (B1) d'ajout de chaux libre consiste à ajouter de la chaux libre à une coulée de scorie d'aciérie de conversion à l'oxygène, à l'état fondu, provenant d'un convertisseur (3) de fusion de la fonte en acier utilisant une charge de chaux, puis à refroidir ladite coulée pour obtenir une scorie surchaulée solide ayant une teneur en chaux libre supérieure ou égale à la seconde valeur précitée,
- ladite étape de broyage consistant à broyer une ou plusieurs scorie(s) surchaulée(s) obtenue(s) à l'étape précédente.

4. Procédé selon la revendication 2, **caractérisé par le fait que** ladite étape (B2) d'ajout de chaux libre consiste à ajouter de la chaux libre à une ou plusieur(s) scorie(s) d'aciérie de conversion à l'oxygène à l'état solide, obtenue(s) après refroidissement d'une ou plusieur(s) coulée(s) de scorie(s) provenant d'un convertisseur (3) de fonte en acier utilisant une charge de chaux, ladite étape d'ajout étant réalisée avant ou pendant ladite étape de broyage, de manière à obtenir un mélange intime de(s) scorie(s) et de chaux libre, ledit mélange intime formant la composition de traitement.

5. Procédé selon la revendication 1 à 4, **caractérisé par le fait que** l'étape (B1, B2) d'ajout de chaux libre est précédée d'une étape (A1, A2) d'analyse chimique de la ou des scorie(s) pour déterminer la quantité nécessaire de chaux libre à ajouter pour atteindre ou dépasser la seconde valeur précitée.

6. Procédé selon l'une des revendications 2 à 5, **caractérisé par le fait que** ladite étape de sélection consiste à sélectionner des coulées de scories à l'état fondu provenant d'un convertisseur de fonte en acier, en fonction de la charge de chaux ajoutée audit convertisseur (3) pour préparer l'acier voulu.

7. Procédé selon l'une des revendications précédentes, **caractérisé par le fait qu'**il comprend une étape de déferrisation de(s) scorie(s) d'aciérie de conversion à l'oxygène à l'état solide.

8. Composition de traitement de sol, **caractérisée par le fait qu'**elle est constituée par un mélange intime d'une ou plusieur(s) scorie(s) moulue(s) ayant une teneur en chaux libre supérieure ou égale à 5 % en poids et de chaux libre, ledit mélange ayant une teneur en chaux libre supérieure à 15 % en poids.

9. Composition de traitement de sol, **caractérisée par le fait qu'**elle comprend une ou plusieur(s) scorie(s) moulue(s) ayant une teneur en chaux libre supérieure à 18 % en poids.

10. Utilisation de la composition de traitement de sol selon la revendication 8 ou 9 pour assécher et floculer un sol.
